# EUROPEAN PATENT APPLICATION

(11) **EP 1 000 828 A1**
(43) Date of publication of application: **17.05.2000**
(21) Application number: 99203730.9
(22) Date of filing: 10.11.1999
(51) Int. Cl.: B60S 9/12

(54) **Trailer**

(30) Priority: 10.11.1998 NL 1010518
(71) Applicant: Van Galen, Fredericus Alfonsus, 7596 LB Rossum (NL)
(72) Inventor: Van Galen, Fredericus Alfonsus, 7596 LB Rossum (NL)
(74) Representative: De Hoop, Eric

(57) **Abstract**

Trailer, such as for instance a caravan, comprising at least one axle provided with wheels (7), which axle is accommodated in one or several axle holders (11) attached to the chassis (10) of the camper, in which supports (60) are arranged to the axle or the axle holders (11), near the wheels (7) which supports (60) can be extended downward and which can be secured in an extended position, preferably a position extending below the lower side of the wheels (7).

## Description

The invention relates to a trailer, such as for instance a caravan.

Trailers, such as for camping purposes, for instance caravans and folding caravans, horse trailers, market cars, vending cars, etc. are usually provided with one axle (in larger embodiments two axles) at each end of which a wheel is provided. At the front side a pole for coupling to a car is provided.

When a trailer is parked in the wanted location it is uncoupled from the car, which however also results in the loss of a support. In order to prevent tilting to the fore and to the rear downward tiltable supports or legs are extended near the front edge and the rear edge. A known electro-hydraulic system to that end is available with the applicant.

When the trailer has to be placed on a transverse sloping terrain it has to be adjusted on a higher level near one of the wheels. Aforementioned legs do not suffice to that end. One of the following help methods are therefore resorted to:
1- the lower wheel is rolled onto a (hopefully sufficiently thick) board;
2- the lower wheel is rolled onto a (ditto) banana-shaped support;
3- the lower wheel is placed on a so-called leveller; or
4- a jack is placed under the axle near the lower wheel and is brought at level.

The methods under 1-3 require some skill in manoeuvring when the car is used to bring the lower wheel onto the aid. When the car cannot be used, for instance because the space for manoeuvring is too limited, the trailer has to be moved by hand, which in case of a caravan can cause problems for the elderly, and to such an extent that for that reason it is decided not to go ahead with a camping trip at all.

The fourth method also requires and additional aid to be placed, for which the necessary skill is required.

From one aspect the object of the invention is to improve on this. To that end according to the invention a trailer is provided, for instance a caravan, comprising at least one axle provided with wheels, which axle is accommodated in one or several axle holders attached to the chassis of the trailer, in which a support is arranged to the axle or the axle holders, near at least one of the wheels which support can be extended downward and which can be secured in an extended position.

The transverse-levelling support need not be stored by the user as separate aid and taken out of storage to subsequently be put in the right place. Because of the connection with the axle or the axle holders it will be in the right location as if of its own accord.

Preferably such a support is provided near each of the two opposite wheels, so that the trailer can be placed and adjusted at spirit level in two orientations on a sloping surface or in case of a horizontal surface be stabilized on both sides under the axle.

Preferably the trailer according to the invention comprises operating means for each support that are separately operated. Thus the support at the location of the higher wheel can also contribute to the stability.

Preferably the support(s) is (are) adapted for being extended to a level below the tyre of the wheel concerned. Thus in a simple manner the car can be protected against theft. An additional advantage being that as a result during winter storage long-term stationary load of the tyre(s) can be prevented. Moreover the support can then be used as a jack.

Preferably the trailer according to the invention furthermore comprises means, preferably hydraulic, for operating the support(s) with the help of fluid pressure.

The operating means preferably comprise a pump, in which the support(s) each comprise a double active cylinder/piston assembly, of which the space above the piston can be brought into connection with and closed off, respectively, from the connection with the pump via a non-return valve. Thus the extended position of the support(s) is secured against moving back.

Preferably the space below the piston in the cylinder/piston assembly can also be brought into connection with and closed off, respectively, from the connection with the pump via a non-return valve. Thus the extended position of the support(s) is also secured against moving on.

Preferably each non-return valve can be operated by a pen attached to a piston moveable in a chamber, which pen extends through a passage, in which the chamber of the one valve and the passage of the other valve are connected with each other.

Preferably the cylinder/piston assemblies and the non-return valve(s) are arranged on the supports. When the hydraulic lines that could possibly be reached by an unauthorised person, are cut through, this will not influence the pressure which prevails at least in the space above the piston, so that the trailer will remain locked. Moreover because of this, it is ruled out that when during a ride a line breaks, a support all of a sudden changes its position and a dangerous situation would arise.

Said protection is increased when the pump is provided with a relief valve, which can be operated by means of a lock.

In a development of the support(s) they comprise a case with a leg that can be moved in there. The case preferably is stationary.

The invention will now be elucidated on the basis of the exemplary embodiment shown in the attached drawings, in which:
Figure 1 shows a trailer in the shape of a caravan having a provision according to the invention;
Figure 2 shows a schematic view of the inside of a wheel of the caravan of figure 1, having a support according to the invention;
Figure 3 shows a further schematic depiction of the support of figure 2; and
Figure 4 shows a schematic depiction of the hydraulic operating circuit for the support according to the invention.

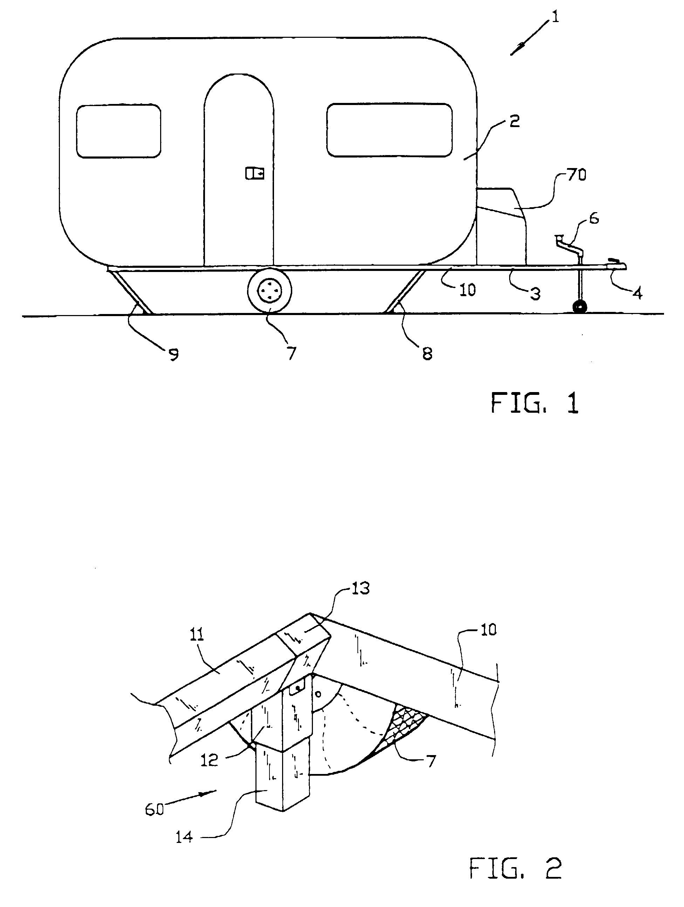

The caravan 1 in figure 1 comprises a housing 2 with a chassis 10, a pole 3 with coupling 4 and liftable little support wheel 6. At the bottom, near the front side and the rear side two supports 8 and 9 are lowered, for providing stability to the caravan against tilting about the wheels 7.

In figure 2 it can be seen how a support 60 according to the invention is arranged. The case-shaped axle holder 11 is shown, which is a part of the chassis 10 of the caravan 1. A clamping assembly 13 is arranged about the case-shaped axle holder 11, with which assembly the case 12 of the support according to the invention is fixedly connected. From the case 12 a leg 14 extends, which can be adjusted in vertical direction and can be locked in the wanted position. In case of a soft substrate a board can be placed under the leg 14 in order to increase the support surface.

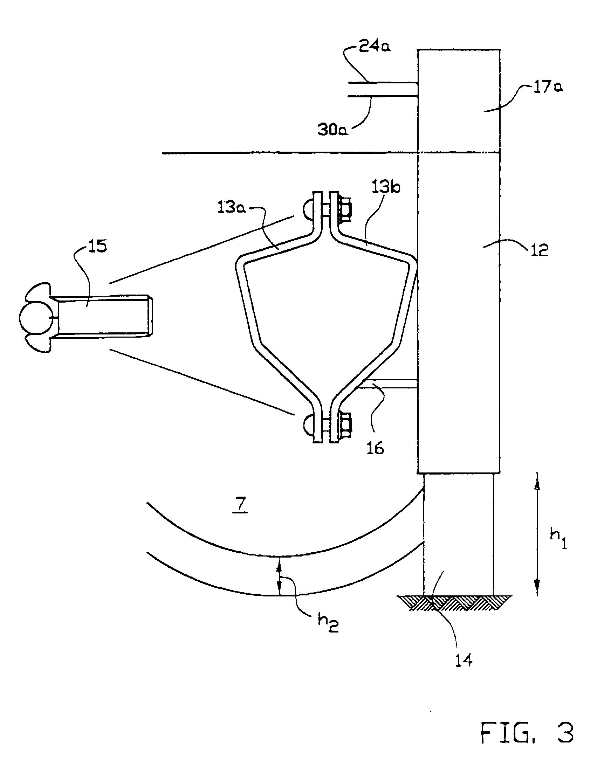

In figure 3 this is further elucidated. It can be seen that the clamp 13 consists of a fixed plate 13b, which by means of inverted T-beam 16 is welded to the case 12. With the help of socket-head screw/nut assemblies 15 the other clamping plate 13a is attached to the clamping plate 13b, enclosing the case-shaped axle holder 11 -which is not shown in figure 3-. The socket-head screws 15 are secured against removal by means of a forced-in ball.

In a schematic manner it is shown that the leg 14 can be moved downwards out of the case 12 over a distance h₁, which is such that the foot plate 15 extends with a distance h₂ below the lower surface of the wheel or tyre 7. The tyre 7 therefore is free from the ground.

The leg 14 can also be extended less far, whatever is wanted, and to what desired extent the tyre 7 carries the weight of the caravan and/or the position of the axle holder 10 with respect to the horizontal needs to be corrected.

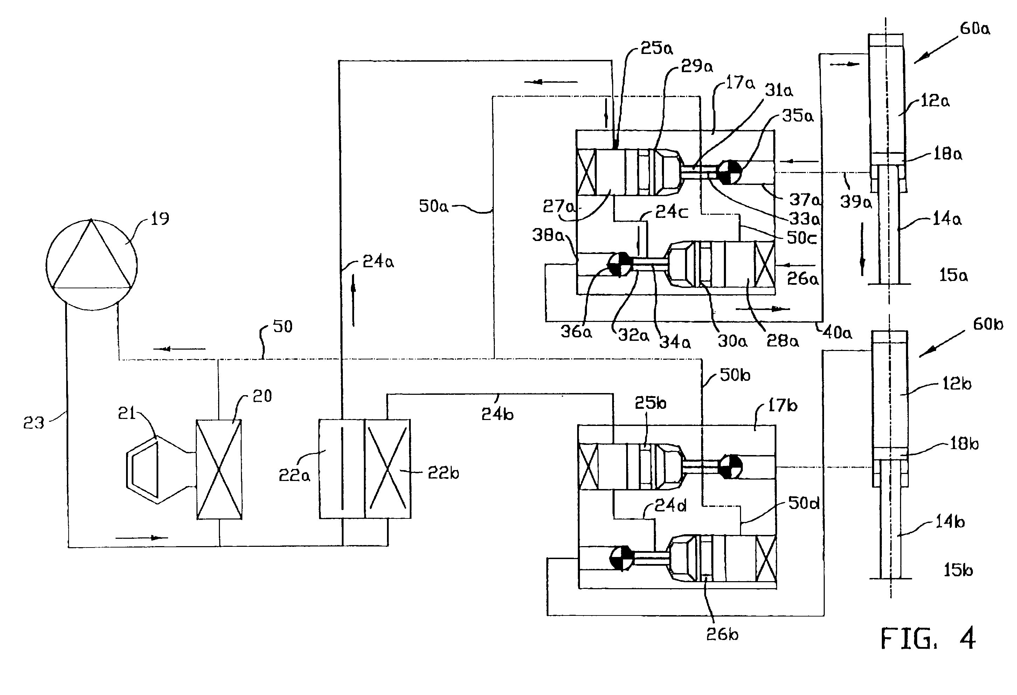

At the upper end of the support 60, in the upper part of the support case 12, there is an accommodation space 17, in which two pre-controlled one-way valves are accommodated, which are accommodated in the hydraulic operating lines for the piston/cylinder assembly for movement of the leg 14. The hydraulic connection with the pump for instance accommodated in the front container 70, takes place via lines 24a and 50a which are schematically shown. It will be understood that a comparable arrangement is provided at the other wheel of the caravan 1, also see figure 4.

In figure 4 the hydraulic diagram for the operation of the supports according to the invention in the caravan 1 is shown. The supports 60a and 60b are shown schematically as piston-cylinder assemblies, with (for support 60a) cylinder 12a and piston rod 14a, on which piston 18a is attached. The space above the piston 18a is connected with port 38a via line 40a, which port can be closed off by means of ball 36a, having its seat at the end of a passage 32a to chamber 28a. In the chamber 28a there is a piston 30a, on which a pen 34a is attached which extends through the passage 32a and may abut the ball 36a. The valve 26a just described is accommodated in accommodation space 17a at the upper end of the case 12a, as shown in figure 3. In the accommodation space 17a there is another similar valve 25a. Via line 24c the passage 32a is connected with the chamber 27a of the valve 25a and via the line 50c the chamber 28a of the valve 26a is connected with passage 31a of the valve 35a. The port 37a of the valve 35a is connected with the space below the piston 18a in the cylinder 12a via the line 39a.

The chamber 27a of the valve 25a is connected with the manually operated valve 22a via line 24a, which valve is opened in the situation shown in figure 4. Next to the valve 22a a second manually operated valve 22b is placed, which is included in the hydraulic operating circuit for the other support 60b. Said circuit is built up in a manner comparable to the hydraulic circuit for the support 60a. In the example shown the valve 22b is closed.

The passage 31a of the valve 25a is connected with line 50a, which just like line 50b for operating support 60b forms a branching of the line 50, which leads from the one side of the pump 19. At the other side of the pump 19 there is a line 23, which leads to the manually operated valve 22a, 22b as well as to the relief valve 20 which is operated by the key 21, which relief valve is included in a connection line between the lines 23 and 50.

The pump 19 and the valves 20, 22a and 22b can be accommodated in front container 70.

If it is desired to for instance extend the support 60a in order to lift the caravan on that side for levelling or to lift the caravan with the tyre 7 free from the ground, the key 21 is turned to close the valve 20, so that the hydraulic oil can no longer be pumped around short. The valve 22a is manually opened, so that the line 24a is pressurized. Also chamber 27a of valve 25a is pressurized, as a result of which the piston 29a as seen in the drawing is urged to the right, and the pen 33a will lift the ball 35a of its seat.

Also the line 24c will then be pressurized, and thus the passage 32a as well. The oil will exert pressure on the ball 36a and it will be lifted from its seat so that the space above the piston 18a will be pressurized via the line 40a.

Because the ball 35a has been lifted the oil can flow from the space below the piston 18a back to the pump 19, via the line 39a and the port 37a, the passage 31a and the line 50a, 50, so that the piston 18a can move downwards and the leg 14a can extend.

When the valve 22a is closed again and the valve 20 is opened again the piston 18a is in a stable position. Moving back of the piston 18a is prevented by the one-way valve formed by the ball 36a, and a moving-on motion of the piston 18a is prevented by the one-way valve formed by the ball 35a.

When it is desired to have the leg 14a move back the action direction of the pump 19 is reversed, the key 21 is turned again and the manually operated valve 22a is opened again, so that the line 50, 50a becomes the pressure line and line 23 the discharging line. Via the line 50a the passage 31a will then be pressurized and the ball 35a will be lifted from its seat and the space below the piston 18a will be pressurized. The same pressure prevails in chamber 28a, as a result of which the ball 36a is lifted. As a result a return flow from the space above the piston 18a via the line 40a, the passage 32a, the line 34c, the chamber 27a and the line 24a is possible.

The valves 25a, b and 26a, b and the lines to the accompanying cylinders are accommodated in the shielded accommodation spaces 17a, b, or integrated in the cylinders, and therefore unauthorized persons have very difficult access to them. When an unauthorized person wishes to take along the caravan, and to that end cuts through the lines 24a, 24b and 50a, b which could possibly be seen by him, this will have no effect on the position of the supports 60a, 60b, which is after all secured by the one-way valves accommodated in the accommodation spaces 17a, 17b. Such a safeguard through hydraulic locking of a caravan is very reliable and will effortlessly comply with the three-minute standard applicable in the Netherlands.

Because of the choice of location of the supports the caravan is loaded there where it is designed for it in common usage. The supports can moreover function as jack for changing the wheels.

## Claims

1. Trailer, such as for instance a caravan, comprising at least one axle provided with wheels, which axle is accommodated in one or several axle holders attached to the chassis of the trailer, in which a support is arranged to the axle or the axle holders, near at least one of the wheels which support can be extended downward and which can be secured in an extended position.

2. Trailer according to claim 1, in which a support is arranged near two wheels situated at opposite sides of the trailer.

3. Trailer according to claim 1 or 2, furthermore comprising means for operating the support or supports with the help of fluid pressure.

4. Trailer according to claims 3, in which the operating means are hydraulic.

5. Trailer according to claim 3 or 4, in which the operating means for each support can be separately operated.

6. Trailer according to any one of the preceding claims, in which the supports are adapted for being extended to a level below the tyre of the wheel concerned.

7. Trailer according to claim 3, 4 or 5, in which the operating means comprise a pump, in which the support(s) each comprise a double active cylinder/piston assembly, of which the space above the piston can be brought into connection with and closed off respectively from the connection with the pump via a non-return valve.

8. Trailer according to claim 7, in which the space below the piston in the cylinder/piston assembly can be brought into connection with and closed off, respectively, from the connection with the pump via a non-return valve.

9. Trailer according to claim 7 or 8, in which each non-return valve can be operated by a pen attached to a piston moveable in a chamber, which pen extends through a passage, in which the chamber of the one valve and the passage of the other valve are in connection with each other.

10. Trailer according to claim 7, 8 or 9, in which the cylinder/piston assemblies and the non-return valve(s) are arranged on the supports, preferably at the upper side thereof.

11. Trailer according to any one of the claims 7-10, in which the hydraulic circuit on or near the pump is provided with a relief valve, which can be operated by means of a lock.

12. Trailer according to any one of the preceding claims, in which the supports comprise a case and a leg that can be moved in there.

13. Trailer according to claim 12, in which the case is stationary.

14. Support suitable for a trailer according to any one of the preceding claims.

15. Trailer provided with one or more of the characterizing measures described in the attached description and/or shown in the attached drawings.
